# EUROPEAN PATENT SPECIFICATION

(11) **EP 2 484 035 B1**
(45) Date of publication and mention of the grant of the patent: **11.03.2020**
(21) Application number: 10762613.7
(22) Date of filing: 15.09.2010
(51) Int. Cl.: H04L 1/00

(54) **WLAN DATA RATE ADAPTION METHOD**
WLAN-Übertragungsgeschwindigkeitsanpassungsverfahren
Procédé d'adaptation du débit de données WLAN

(30) Priority: 29.09.2009 EP 09305910
(43) Date of publication of application: 08.08.2012
(73) Proprietor: InterDigital CE Patent Holdings, 75017 Paris (FR)
(72) Inventor: LIU, Wei, F-92443 Issy-les-Moulineaux cedex (FR); SUI, Cheng, F-92443 Issy-les-Moulineaux cedex (FR); ZHANG, Junbiao, F-92443 Issy-les-Moulineaux cedex (FR); YU, Jin Fei, F-92443 Issy-les-Moulineaux cedex (FR)
(74) Representative: Esselin, Sophie
(86) International application number: PCT/EP2010/063552
(87) International publication number: WO 2011/039053

(56) References cited:
- US-A1- 2006 240 783
- US-B1- 7 369 510
- US-B2- 7 016 670

## Description

### FIELD OF THE INVENTION

The present invention relates generally to the field of wireless communication, and more particularly, to a WLAN (Wireless Local Area Network) data rate adaption method under a network environment with stable channel conditions.

### BACKGROUND OF THE INVENTION

A WLAN is such a network system that a part of the wire LAN is constructed by a wireless system, in which wireless stations can be bridged to the backbone network via an access point.

The IEEE 802.11 standard for WLAN data communication provides a multi-rate capability, in which a transmitter can transmit packets using any one of multiple optional data rates according to the quality of the channel condition. That is, the physical layer (PHY) of the IEEE 802.11 standard supports multi-rate transmission of the transmitter by dynamically selecting an appropriate modulation technique, for example, according to the feedback of the receiver on the signal strength of received packets. This in turn will enable a Wireless Network Interface Card (WNIC) to adapt a transmission rate to a radio channel condition.

The following table shows a Modulations and Coding Scheme (MCS) used in the IEEE 802.11 standard. As seen from this table, every transmission rate is adapted by a unique MCS to respective wireless channel condition. If a wireless channel condition can not support one given MCS, another MCS will be adopted to achieve higher throughput.

**Table 1**

| Transmission rate | 802.11 standard | Modulation Scheme | Bits per Symbol | Coding Scheme |
|---|---|---|---|---|
| 1 | b | BPSK | 1 | 1/11 |
| 2 | b | QPSK | 2 | 1/11 |
| 5.5 | b | CCK | 1 | 4/8 |
| 11 | b | CCK | 2 | 4/8 |
| 6 | a/g | BPSK | 1 | 1/2 |
| 9 | a/g | BPSK | 1 | 3/4 |
| 12 | a/g | QPSK | 2 | 1/2 |
| 18 | a/g | QPSK | 2 | 3/4 |
| 24 | a/g | QAM-16 | 4 | 1/2 |
| 36 | a/g | QAM-16 | 4 | 3/4 |
| 48 | a/g | QAM-64 | 6 | 2/3 |
| 54 | a/g | QAM-64 | 6 | 3/4 |

While the IEEE 802.11 standard includes a specification for 802.11 MAC protocol and RF-oriented PHY parameters, it does not define any particular data rate adaption schemes or Rate Control Algorithms (RCAs). This topic is open to device manufacturers to improvise. Several data rate adaption methods have been proposed and used with the IEEE 802.11 standard. Next, some known RCAs will be described.

### 1. ARF and Onoe algorithms

ARF (Auto Rate Fallback) was developed for WaveLAN-II 802.11 WNICs. According to the ARF, each transmitter attempts to use a higher transmission rate after a pre-designed fixed number of continuous transmissions at a given rate and switches back to a lower rate relative to its currently used rate after two consecutive failures.

The ARF algorithm has advantages of easy implementation in small devices and good performance in conditions where wireless channel quality is changing frequently. However, in spite of its easy deployment in practical application environment, the ARF algorithm will have a poor performance in a situation where wireless links have no much fluctuation on packet loss caused by environmental changes. For example, in a family environment, people are more inclined to sit down to enjoy wireless applications without frequently moving around. In such case, the ARF may often or in a fixed time interval increase the packets transmission rate over the optimal value to another one, which requires many retries for each packet. It will take much time for this procedure to try many transmission rates which are doomed to fail.

The Onoe algorithm, which basically applies the same idea as the ARF, is a credit based RCA where a credit is used to evaluate the performance under current packet transmission rate (just like a score system). The value of the credit is determined by the numbers of continuous transmission, erroneous transmission and retransmissions accumulated during a fixed period, such as 1000 ms. If less than for example 10% of the packets needs to be retransmitted at a particular rate, the Onoe algorithm will keep increasing its credit point till a threshold value, for example 10, is reached. At this point, the current transmission rate is increased to the next available higher rate and the process will repeat with credit score being zero. Similar logic holds for deducting the credit score and moving to a lower bitrate for failed packet transmission/retransmission attempts.

Although it can alleviate the fluctuation of channel condition, the Onoe algorithm is relatively conservative. That is, once the Onoe algorithm detects that a transmission rate does not work, it will not attempt to step up again within at least 10 seconds. Also, if wireless channel condition degrades for some reasons, the Onoe algorithm will waste roughly 9 seconds to step down in most of such situations. Assuming that the transmission rate is reduced from 24Mbps to 5.5Mbps for an occasional interference, according to a calculation, it will take about 60s for the Onoe algorithm to recover to the previous rate of 24Mbps after the interference disappears, which is huge resource consumption in practical applications.

### 2. AARF and AMRR (Adaptive Multi Rate Retry) algorithms

As described above, ARF will try to use a higher rate every 10 consecutive packets, which will result in increased retransmission attempts and thus a decreased application throughput if the channel condition is relatively stable. To overcome the above disadvantage, a solution called AARF (Automatic ARF) is proposed to increase the threshold used to decide when to increase the current rate, for example, from 10 to 40 or 80. AARF is an extension of ARF, in which the step up parameter is doubled every time the algorithm tries to increase the packet transmission rate but the subsequent packet fails. This can largely increase throughput in a situation where the channel condition does not dramatically fluctuate.

A weak point of the AARF algorithm is that it will take more time to step up to an optimal transmission rate even channel condition supports this rate. This is because the packet loss exists everywhere and AARF will enlarge the occasional packet loss, which will induce a longer adaption time.

Similarly to the AARF, AMRR algorithm also uses the Binary Exponential technique to adapt the length (threshold) of the sampling period which is used to change the value of transmission rate parameter. AMRR, which was combined to Madwifi 802.11 driver, implements and remains the algorithm principle the same as AARF. Therefore, AMRR has the same weak point as AARF.

### 3. SampleRate algorithm

SampleRate algorithm determines the transmission rate based on the history of performance. In this algorithm, the transmitter keeps a record of the number of successive failures, the number of continuous transmissions and the total transmission time along with the destination for that transmission rate. Stale samples are removed based on an evaluation window mechanism.

SampleRate stops using a transmission rate if there are four successive failures. So when starting to send packets over a link, the SampleRate will decrease the transmission rate until it finds a transmission rate that is capable of sending packets. SampleRate selects a random transmission rate every tenth data packet from a set of bit-rates that may be better than the current one and sends the packet using that selected transmission rate. To calculate the average transmission time of each transmission rate, SampleRate uses feedback from the wireless card to calculate how much time each packet transmission required. SampleRate calculates the transmission time for each packet using the packet length, transmission rate and the number of retries.

The SampleRate algorithm can achieve a good performance especially in a channel condition where packet loss often occurs. Compared with some other existing RCAs, SampleRate can adapt itself more quickly to wireless channel condition fluctuation. But according to the principle of this algorithm, we can know that SampleRate actually achieves the optimal transmission rate by a probability fashion. Thus, it will take SampleRate much time to reach the optimal transmission rate, especially in a case of recovering to previous higher rate from a lower rate caused by an occasional interference after the interference disappears.

As a conclusion, conventional data rate adaption methods, including the above described RCAs, have a common disadvantage that the data rate is easy to drop down but difficult to restore.

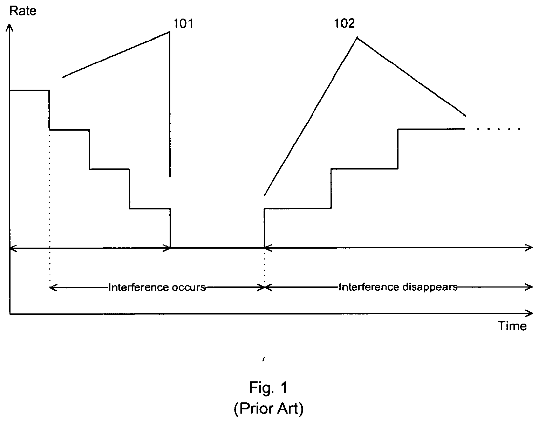

Figure 1 is an exemplary diagram showing the adjustment procedure of the existing RCAs. As shown by line 101 in Figure 1, when an occasional wireless interference occurs, the RCA will quickly respond by degrading the transmission rate step by step to a lower value. However, after the interference disappears, it will take a long time for the RCA to recover transmission rate to the level before the interference occurs, as shown by line 102 in Figure 1. For example, according to the above-described Onoe algorithm, in most cases when a channel condition deteriorates by interference, it will only take transmission failure time of 5 packets (including retry time) for packet transmission rate to drop from 24Mbps to 11 Mbps. But in a good channel condition after the interference disappears, it will take 50 seconds to restore to the transmission rate of 24Mbps.

The main reason of this common disadvantage arises from the fact that all the existing RCAs assume that the wireless network will operate in an environment where channel conditions change frequently due to various interferences. However, if we consider a more dedicated network such as family or home WLAN which operates in a relatively stable environment, a more efficient data transmission rate adaptation method is needed.

US 2006/0240783 to Kawada discloses a wireless communication with adaptation of the data rate in case a degraded radio communication conditions where, when returning to a normal state after degradation of radio communication, the transmitter uses the control information that was stored immediately before receiving the state information indicative of the degradation, to calculate the data rate.

### SUMMARY OF THE INVENTION

The invention is defined and limited by the scope of appended claims. In the following description, any embodiments referred to and not falling within the scope of the appended claims, are merely examples useful to the understanding of the invention.

### BRIEF DESCRIPTION OF DRAWINGS

These and other aspects, features and advantages of the present invention will become apparent from the following description in connection with the accompanying drawings in which:
Figure 1 is an exemplary diagram showing the adjustment procedure of the existing data rate adaption methods;
Figure 2 is an exemplary diagram showing the principle of the data rate adaption method according to an embodiment of the invention;
Figure 3 is an exemplary diagram showing the rate adaption method according to an embodiment of the present invention;
Figure 4 is a flow chart showing the procedure for determining the disappearance of an interference according to an embodiment of the present invention; and
Figures 5(a), 5(b) and 5(c) are an exemplary diagrams showing the performance of communication when a wireless receiver operates in various situations, where a wireless transmitter applies the method according to the embodiment.

### DETAIL DESCRIPTION OF PREFERRED EMBODIMENTS

In the following description, various aspects of an embodiment of the present invention will be described. For the purpose of explanation, specific configurations and details are set forth in order to provide a thorough understanding. However, it will also be apparent to one skilled in the art that the present invention may be practiced without the specific details present herein.

### 1. Application environment

WLANs are applicable to both indoor and outdoor environments. The indoor environment, such as in homes, office buildings, hospitals and classrooms, usually has a more stable channel condition than the outdoor environment.

As an example, in an office building, a wireless station (or any device with wireless capability), as a receiver, normally operates at a fixed place of a room and does not frequently move around within the room. The above-mentioned wireless station can be a laptop, a PDA (Personal Digital Assistant) or other handheld devices. In this case, the wireless channel condition of the wireless station is stable and does not change frequently. Certainly the wireless channel condition may be degraded by some occasional interferences, such as those caused by movement of the wireless station or other big moving objects in the room. But the channel quality is only impacted by the interferences within a short time and will not be substantially changed after the disappearance of such interferences. In such case, a wireless access point, as a transmitter in this case, has a stable channel condition in term of the data rate adaption.

A data rate adaption method according to an embodiment of the invention is preferably applicable to the above network environment.

### 2. Basic approach

As described above, the conventional data rate adaption methods have a problem that it will take longer time for data rate to recover after the interference disappears. In view of this problem, the embodiment of the invention proposes a solution to directly adapt the data rate of a transmitter, after the interference disappears, to a data rate which is stably used before the interference disappears. According to the embodiment, a transient time for the data rate adaption is reduced, which in turn will improve the throughput performance of the WLAN.

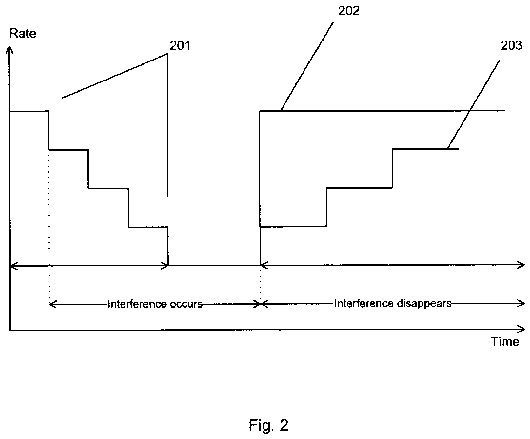

Figure 2 is an exemplary diagram showing the principle of the data rate adaption method according to an embodiment of the invention.

As shown in Fig.2, when an occasional interference is determined to be occurring, the data transmission rate of a transmitter will be adapted as indicated by the line 201 in Fig.2, which is similar to the prior art shown in Figure 1. This adaption will guarantee that no much packet loss occurs when the interference is introduced. But according to the embodiment of the invention, when the interference disappears, the data rate will be directly adjusted to previous stable rate which is used before the interference disappears, as indicated by the line 202 in Figure 2. Compared with the adaption of prior art which is indicated by the line 203 in Figure 2, the adaption method according to the embodiment of the invention will take a shorter transient time to restore to the stable transmission rate. The invention can be incorporated into the existing RCAs to further improve the throughput performance of the WLAN.

### 3. Detailed workflow

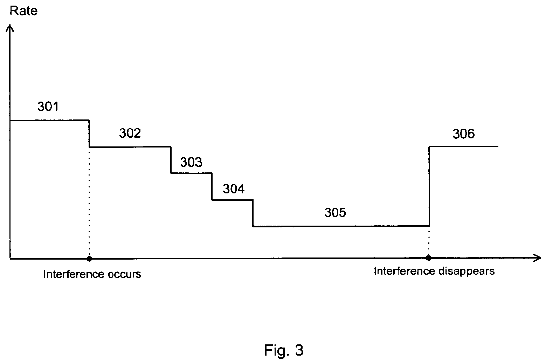

Figure 3 is an exemplary diagram showing the rate adaption method according to the embodiment of the present invention.

As shown in Figure 3, under a normal channel condition, the maximum data rate indicated by line 301 is applied by the transmitter. When interference occurs, the data rate will be adapted to the channel condition under the interference by trying transmission rates downwardly step by step as indicated by lines 302, 303 and 304 and finally set to a rate indicated by line 305. According to the embodiment of the invention, if the interference disappears, the date rate will be adjusted from the rate 305 directly to the rate 306 which is equal to a previous stable rate, the rate 302 in this embodiment. From the illustration in Fig.3, it can be seen that less transient time is taken for the adaption of the transmission rate according to the embodiment so that the throughput performance will be improved.

In the embodiment of the invention, a term "stable rate" is introduced. In Figure 3, the data rates represented by lines 301, 302 and 305 are respective stable rates while the data rates represented by lines 303 and 304 are not stable ones and can be called "transient rates".

Next, a description will be made on how to define a "stable rate". Several parameters, such as continuously transmitted packet number and total transmission time at this rate, can be selected to define the stable rate. For example, in case the continuously transmitted packet number is selected, a value ***STABLE_RATE_THRESHOLD*** can be used to present the transmitted packet number threshold. A transmission rate at which the continuously transmitted packet number is equal to or greater than ***STABLE_RA_TE_THRESHOLD*** can be defined as a stable rate. On the contrary, a transmission rate at which the continuous transmitted packet number is smaller than ***STABLE_RATE_THRESHOLD*** is defined as a transient rate.

Similarly, in case total transmission time is selected, a threshold value can also be set to be used to define the stable and the transient rates.

A person skilled in the art can appreciate that other criteria can also be used for determining a stable rate. Definitions of the stable rate and the transient rate can differentiate between long term and short term fluctuations of wireless channel condition.

As described above, after the interference disappears, the transmission rate is directly adapted to be equal to the stable rate 302 among two previous stable rates 301 and 302.

The previous stable rate is a stable rate before the interference disappears but excluding the current date rate from which the adaption is made. According to the embodiment of the present invention, a predetermined criterion can be used for deciding which one of the previous stable rates is selected for the adaption. For example, conservatively the minimum one of all previous stable rates can be selected for the adaption, which is the case of the embodiment. As another example, the maximum rate of all stable rates can be selected. In that case for the embodiment described, the data rate 306 will be equal to the stable rate 301.

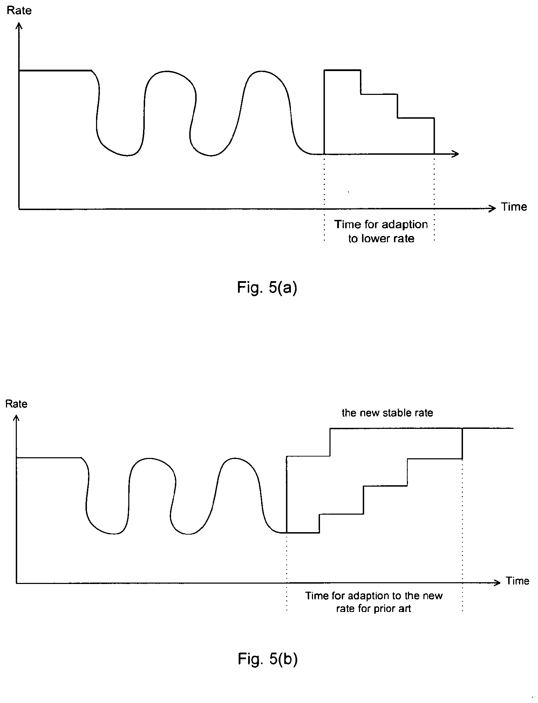

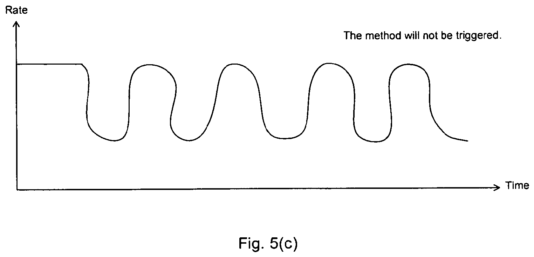

It will be appreciated by a person skilled in the art that transmission rate adaption will be continued according to the quality of the channel condition after the rate is set as one previous stable rate. Detailed description in this respect will be made later with reference to Figure 5.

As previously described, the method according to the embodiment of the invention can be integrated into existing RCAs, so the determination of a stable rate may depend on what RCA is applied. Next, an example of the method being applied together with Onoe rate control algorithm will be described with regard to the determination of the stable rate and the selection of a previous stable rate for the adaption.

The main points of this example are as follows:
(1) If no packets have been continuously transmitted at one rate, this rate will not be marked as a stable rate.
(2) If the number of continuously transmitted packets at one rate is less than 10, this rate will not be marked as a stable rate.
(3) If transmission time at one rate is less than 1 second, this rate will not be marked as a stable rate. This rule is based on the principle of Onoe that it will calculate credit within 1 second time interval.
(4) Other rates can be marked as stable rates.
(5) From all previous stable rates we can choose the minimal one for the rate adaption.

In this embodiment, in view of the fluctuation property of wireless channel, conservatively the minimal one of previous stable rates can be selected for the adaption. But for most of existing RCAs with the property of fast rate dropping down and low rate speeding up, we can also select the maximum one of previous stable rates for the adaption, which may be decided depending on practical application scenario.

During the implementation of the rate selection, a table data structure called ***RateUsed*** is proposed, which contain all stable data rates that could be used. This table is used to record all previous stable rates, from which one of the rates could be selected for the adaption. The rate table is shown below:

```
        typedef struct
        {
           /* n equal to the max rate support in this 802.11 mode */
          enum RATE {R1,R2,......Rn};
           Rate rte[n];
           /* for example, we use transmission time as a metric to mark the
 stable transmission rate */
          double runningTime[n];
          /* for example, we also can use transmitted packet number as
 metric to mark the stable transmission rate */
          int transmittedPacketNumber[n];
           .......................; //other status field which are not illustrated here
        }RateUsed
```

Preferably, a timer can be used to clear off some "stale" statistical information in the above table regularly.

Next, a description will be made on embodiments of indicator selection to determine the "disappearance of interference".

Several schemes can be used to judge the disappearance of interference. In one embodiment, packet loss or retry count of the transmission can be used as an indicator to judge whether the interference disappears. Assuming that an obvious packet loss and an average transmission retry, which cause transmission rate to drop to a lower value rapidly once occasional interference appears, can be observed, the packet loss and the average transmission retry will remain a reasonable value in the lower transmission rate. Therefore, if the interference disappears and the wireless channel condition can support a higher transmission rate, it can be considered that the packet loss rate and average retry count will largely decrease.

Considering a relatively aggressive metric to judge the disappearance of interference, if a successful transmission of certain number of continuous packets without retry is detected, a judgment can be made that the interference disappears. Here, we can use a parameter ***INTERFERENCE_PACKET_THRESHOLD*** for the judgment. If the number of successive or continuous packet transmission without retry exceeds the ***INTERFERENCE_PACKET_THRESHOLD*** parameter, the transmission rate can be directly adjusted to "previous stable rate" according to the above-described method in accordance with the embodiment of the present invention.

Due to the fluctuation characteristic of wireless channel, it the metric of interference disappearance described above might be a bit aggressive or insufficient. In other words, in many cases the number of continuous packet transmission without retry cannot reach the threshold even though the interference disappears. In view of the this, in one case we can use a further metric in which both the packet loss rate or average retry count are used at the same time by virtual of the information processing or statistical methods as association.

A more precise combinational indicator may take more metrics into consideration, such as packet loss rate, retry count, RSSI (Received Signal Strength Indicator) or SNR (Signal to Noise Ratio) value. For example, we can use the packet loss rate or average retries count and measured SNR or RSSI as the second judgment. In this case, a test window can be designed for calculating the average packet loss rate or retry count and RSSI/SNR, similar to what normal RCAs operate. Certainly, in this case the proper selection of the length of the test window is preferable. However, it should be noted that the embodiment of the present invention does not require a large test window. According to the theory of mutual information, long-term estimation over long sampling periods is actually not helpful. Said mutual information indicates the mutual dependency of two random variables, i.e., how much information one random variable can tell about the other. The transmission success/failure event at a given time will be treated as a random variable to calculate the mutual information for two events at different time instants. Experiments show that too large test window is not effective, but even may gives a wrong estimation result. So, in a proper window length if packet loss rate or average retry count is below a threshold parameter called ***INTERFERENCE_SECOND_THRESHOLD*** we also can take advantage of some more assistant metrics to decide whether the random interference disappears.

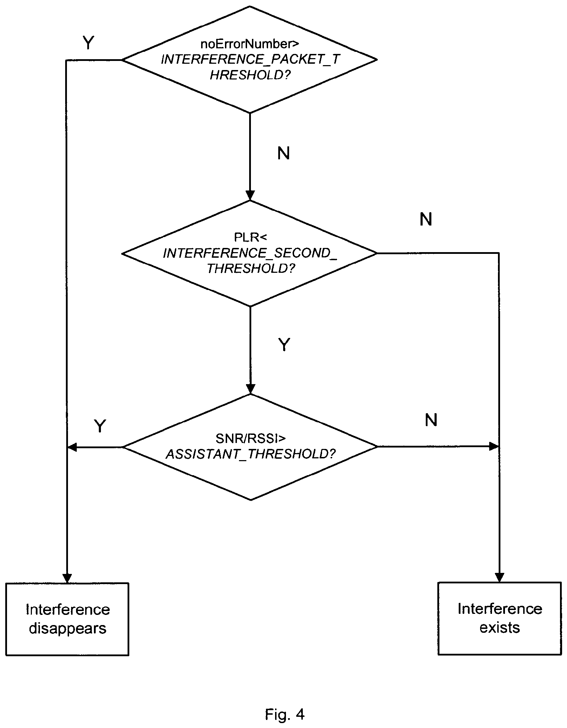

Figure 4 is a flow chart showing the procedure of determining the disappearance of interference according to an embodiment of the present invention. In Figure 4, "noErrorNumber" is used to denote the number of continuous transmission of packets without retry. According to previous description, the disappearance of the interference can be determined by this metric although it is a bit aggressive, as shown by the step S401 in Figure 4. If the result of the step S401 is "No", the second metric which is a combination of PLR (packet loss rate in a fixed window size) and SNR/RSSI can be applied. As shown by the steps S402 and S403 in Figure 4, if the PLR lower than a threshold and SNR/RSSI larger than a threshold called ***ASSISTANT_THRESHOLD,*** we also can decide that the interference disappears.

As an alternative, methods for judging the disappearance of interference in existing RCAs can also be used. For example, Onoe algorithm will increase transmission rate if the current transmission rate has 10 or more credits. Similar metric can also be applied in the embodiment of the invention.

In 802.11n, a recommended MCS (Modulation and Coding Scheme) at a receiver side can be feedback by the receiver to the transmitter, which is a more precise method to indicate the channel conditions in receiver side.

Several methods are described for judging the disappearance of interference. There is a risk for all these methods of increasing transmission rate too aggressively. However, in view of the fact that most of RCAs will degrade transmission rate very quickly if the rate is not proper, the method according to the embodiment of the invention can inevitably enhance the throughput performance on the whole.

In the above description, the data rate adaption method according to an embodiment of the invention is explained. The method is preferably used in a stable channel environment which actually is the most common case for indoor applications.

Next, the performance of communication when a wireless receiver operates in various situations where a wireless transmitter applies the method according to the embodiment will be illustrated with reference to Figure 5. We assume that the wireless receiver is moving constantly, which leads to fluctuation of the quality of wireless channel from time to time.

In a first case where the receiver moves from a room A to another room B that has worse wireless channel conditions than the room A, a previous stable rate will be applied for the wireless transmitter after the disappearance of an interference according to the rate adaption method of the embodiment of the invention, which may be higher than the proper rate that can be supported by the channel condition in the room B. In such case, the transmission rate of the transmitter then will be fast dropping down due to high packet loss rate, as shown in Figure 5(a). As we know, it will only take a very short time to decrease the rate. So a real stable rate will be quickly obtained in this case. Thus it can be seen from Figure 5(a), although the throughput performance might be degenerated a little in this case, degree of performance degeneration is acceptable for most applications since the transient time is generally very short.

The second case is contrary to the first one, where the wireless receiver moves from the room B to the room A that has better wireless channel conditions than the room B. According to the rate adaption method of the embodiment of the invention, after the direct adaption of the transmission rate to the previous stable rate by the transmitter, the transmission rate will continue to be adjusted based on the wireless channel condition from the previous stable rate. As shown in Figure 5(b), the transmission rate is then adjusted to a value higher than the previous stable rate since the channel condition becomes better. It can be appreciated that in this case the throughput performance can be greatly improved as compared to the conventional solution.

In a special third case which rarely exists in indoor applications, there is no stable environment exists. In this case, the direct adaption of previous stable rate by the wireless transmitter according to the method will not be triggered until a stable channel condition is detected. In extreme case, if a wrong decision is made and the rate is adjusted to be the previous stable rate, the only result is that some rate fluctuation may be introduced. So there will be only a little negative effect on the throughput performance in this case.

From the above analysis we can see that the proposed method according to the embodiment of the present invention can largely improve the throughput performance in most cases of an indoor wireless application.

While the embodiments are presented in the context of the indoor wireless application, those skilled in the art will recognize that the principles of the invention are applicable to other applications with relatively stable channel conditions. It is to be understood that numerous modifications may be made to the illustrative embodiments and that other arrangements may be devised without departing from the scope of the present invention as defined by the appended claims.

## Claims

1. A method of multi-rate WLAN communication between a transmitter and a receiver over a channel, wherein the transmitter is capable of transmitting packets with multiple data rates, each data rate corresponding to a respective channel condition with regards to the performance of the WLAN communication, wherein at the level of the transmitter
recording stable data rates (301, 302) that are used, wherein a stable data rate is a rate at which the number of continuously transmitted packets is equal to or larger than a predetermined value or at which the total transmission time is equal to or larger than a predetermined value, and
upon detection of a disappearance of a deterioration of the channel condition, selecting a maximum stable data rate (301) from among the recorded stable data rates (301, 302, 305) that were stably used before the disappearance of the deterioration, but larger than the last data rate (305) used before disappearance of the deterioration; and
transmitting packets at said selected maximum data rate (301).

2. The method according to claim 1, wherein said recording comprises recording a stable data rate in a table, with a transmission time or a transmitted packet number as a corresponding metric.

3. The method according to claim 1 or 2, wherein the detection of a disappearance of the deterioration is a function of packet loss rate of the transmission or the strength and SNR of signals received by the receiver.

4. A transmitter in a multi-rate WLAN, wherein the transmitter is capable of transmitting packets with multiple data rates to a receiver, each data rate corresponding to a respective channel condition with regards to the performance of the WLAN communication, the transmitter comprising detection means of a disappearance of a deterioration of the channel condition, and wherein the transmitter further comprises
recording means for recording stable data rates (301, 302) that are used, wherein a stable data rate is a rate at which the number of continuously transmitted packets is equal to or larger than a predetermined value or at which the total transmission time is equal to or larger than a predetermined value, and
wherein upon such a detection of a disappearance of a deterioration of the channel condition, the transmitter is configured to:
- select a maximum data rate from among the recorded stable data rates that were stably used before the disappearance of the deterioration, but larger than the last data rate used before disappearance of the deterioration, and
- transmit packets at said selected maximum data rate.

5. The transmitter according to claim 4, wherein the recording means comprise a table data structure for recording a stable data rate with a transmission time or a transmitted packet number as a corresponding metric.

6. The transmitter according to claim 4 or 5, wherein the transmitter is a wireless access point and the receiver is a wireless station.

## Patentansprüche

1. Verfahren für die Mehrraten-WLAN-Kommunikation zwischen einem Sender und einem Empfänger über einen Kanal, wobei der Sender in der Lage ist, Pakete mit mehreren Datenraten zu senden, wobei jede Datenrate hinsichtlich der Leistungsfähigkeit der WLAN-Kommunikation einem jeweiligen Kanalzustand entspricht, wobei auf der Ebene des Senders:
stabile Datenraten (301, 302), die verwendet werden, aufgezeichnet werden, wobei eine stabile Datenrate eine Rate ist, bei der die Anzahl ununterbrochen übertragener Pakete gleich oder größer einem vorgegebenen Wert ist oder bei der die Gesamtübertragungszeit gleich oder größer einem vorgegebenen Wert ist, und
bei Detektion eines Verschwindens einer Verschlechterung des Kanalzustands, Auswählen einer maximalen stabilen Datenrate (301) unter den aufgezeichneten stabilen Datenraten (301, 302, 305), die vor dem Verschwinden der Verschlechterung stabil verwendet wurden, aber größer als die letzte vor dem Verschwinden der Verschlechterung verwendeten Datenrate (305); und
Senden von Paketen mit der ausgewählten maximalen Datenrate (301).

2. Verfahren nach Anspruch 1, wobei das Aufzeichnen das Aufzeichnen einer stabilen Datenrate in einer Tabelle mit einer Übertragungszeit oder mit einer Anzahl übertragener Pakete als einer entsprechenden Metrik umfasst.

3. Verfahren nach Anspruch 1 oder 2, wobei die Detektion eines Verschwindens der Verschlechterung eine Funktion der Paketverlustrate der Übertragung oder der Stärke und des SNR der Signale, die durch den Empfänger empfangen wurden, ist.

4. Sender in einem Mehrraten-WLAN, wobei der Sender in der Lage ist, Pakete mit mehreren Datenraten an einen Empfänger zu senden, wobei jede Datenrate hinsichtlich der Leistungsfähigkeit der WLAN-Kommunikation einem jeweiligen Kanalzustand entspricht, wobei der Sender Detektionsmittel eines Verschwindens einer Verschlechterung des Kanalzustands umfasst und wobei der Sender ferner Aufzeichnungsmittel zum Aufzeichnen stabiler Datenraten (301, 302), die verwendet werden, umfasst, wobei eine stabile Datenrate eine Rate ist, bei der die Anzahl ununterbrochen übertragener Pakete gleich oder größer einem vorgegebenen Wert ist oder bei dem die Gesamtübertragungszeit gleich oder größer einem vorgegebenen Wert ist, und wobei der Sender dafür konfiguriert ist, bei einer solchen Detektion eines Verschwindens einer Verschlechterung des Kanalzustands:
- unter den aufgezeichneten stabilen Datenraten, die vor dem Verschwinden der Verschlechterung stabil verwendet wurden, aber größer als die letzte vor dem Verschwinden der Verschlechterung verwendete Datenrate, eine maximale Datenrate auszuwählen; und
Pakete mit der ausgewählten maximalen Datenrate zu senden.

5. Sender nach Anspruch 4, wobei die Aufzeichnungsmittel eine Tabellendatenstruktur zum Aufzeichnen einer stabilen Datenrate mit einer Übertragungszeit oder mit einer Anzahl übertragener Pakete als einer entsprechenden Metrik umfassen.

6. Sender nach Anspruch 4 oder 5, wobei der Sender ein drahtloser Zugangspunkt ist und der Empfänger eine drahtlose Station ist.

## Revendications

1. Procédé de communication WLAN multi-débit entre un émetteur et un récepteur sur un canal, dans lequel l'émetteur est capable de transmettre des paquets à de multiples débits de données, chaque débit de données correspondant à une condition de canal respective concernant l'efficacité de la communication WLAN, où le procédé comprend les étapes consistant à, au niveau de l'émetteur,
enregistrer des débits de données stables (301, 302) qui sont utilisés, où un débit de données stable est un débit auquel le nombre de paquets transmis en continu est supérieur ou égal à une valeur prédéterminée ou auquel la durée totale de transmission est supérieure ou égale à une valeur prédéterminée, et
lors de la détection d'une disparition d'une détérioration de la condition de canal, sélectionner un débit de données stable maximal (301) parmi les débits de données stables enregistrés (301, 302, 305) qui étaient utilisés de manière stable avant la disparition de la détérioration, mais supérieur au dernier débit de données (305) utilisé avant la disparition de la détérioration ; et
transmettre des paquets audit débit de données maximal sélectionné (301).

2. Procédé selon la revendication 1, dans lequel ledit enregistrement comprend l'enregistrement d'un débit de données stable dans une table, avec une durée de transmission ou un nombre de paquets transmis comme métrique correspondante.

3. Procédé selon la revendication 1 ou 2, dans lequel la détection d'une disparition de la détérioration dépend du taux de perte de paquets de la transmission ou de la force et du RSB des signaux reçus par le récepteur.

4. Émetteur dans un WLAN multi-débit, où l'émetteur est capable de transmettre des paquets à de multiples débits de données, chaque débit de données correspondant à une condition de canal respective concernant l'efficacité de la communication WLAN, l'émetteur comprenant un moyen de détection d'une disparition d'une détérioration de la condition de canal, et où l'émetteur comprend en outre un moyen d'enregistrement de débits de données stables (301, 302) qui sont utilisés, où un débit de données stable est un débit auquel le nombre de paquets transmis en continu est supérieur ou égal à une valeur prédéterminée ou auquel la durée totale de transmission est supérieure ou égale à une valeur prédéterminée, et
où lors de la détection d'une disparition d'une détérioration de la condition de canal, l'émetteur est configuré pour :
- sélectionner un débit de données maximal parmi les débits de données stables enregistrés qui étaient utilisés de manière stable avant la disparition de la détérioration, mais supérieur au dernier débit de données utilisé avant la disparition de la détérioration,
- transmettre des paquets audit débit de données maximal sélectionné.

5. Émetteur selon la revendication 4, dans lequel le moyen d'enregistrement comprend une structure de données de type table pour l'enregistrement d'un débit de données stable avec une durée de transmission ou un nombre de paquets transmis comme métrique correspondante.

6. Émetteur selon la revendication 4 ou 5, dans lequel l'émetteur est un point d'accès sans fil et le récepteur est un poste sans fil.
